# EUROPÄISCHE PATENTSCHRIFT

(11) **EP 2 066 549 B1**
(45) Veröffentlichungstag und Bekanntmachung des Hinweises auf die Patenterteilung: **10.11.2010**
(21) Anmeldenummer: 07802256.3
(22) Anmeldetag: 11.09.2007
(51) Int. Cl.: B62D 21/15, B62D 21/04, B62D 21/02, B62D 29/00

(54) **KAROSSERIE FÜR EIN KRAFTFAHRZEUG**
BODY FOR A MOTOR VEHICLE
CARROSSERIE POUR UN VÉHICULE AUTOMOBILE

(30) Priorität: 27.09.2006 DE 102006045494
(43) Veröffentlichungstag der Anmeldung: 10.06.2009
(73) Patentinhaber: Bayerische Motoren Werke Aktiengesellschaft, 80809 München (DE)
(72) Erfinder: SCHNELLER, Josef, 85114 Buxheim (DE); RILL, Roland, 80807 München (DE); WINKLER, Herbert, 82140 Olching (DE); GRUENN, Ralf, 85661 Forstinning (DE)
(74) Vertreter: Günther, Hans Peter
(86) Internationale Anmeldenummer: PCT/EP2007/007892
(87) Internationale Veröffentlichungsnummer: WO 2008/037350

(56) Entgegenhaltungen:
- EP-A- 0 733 539
- EP-A- 1 190 938
- EP-A- 1 702 833
- WO-A-2006/050688
- DE-A1-102005 038 488
- DE-A1-102006 012 974
- US-A1- 2004 113 461
- ANONYMOUS: "Cold-rolled quenched & tempered steel, boron-alloyed, for cold forming and subsequent hot forming,(suitable for press hardening) (Sheet 22MnB5 number 11-112)" SALZGITTER FLACHSTAHL MATERIAL DATA SHEET, [Online] 1. November 2005 (2005-11-01), XP002459199 Gefunden im Internet: URL:www.salzgitter-flachstahl.de/MediaDate nBank/downloadcenter_en/Cold_rolled_and_su rface_coated_products/Material_data_sheets /22MnB5_Material_data_sheet_11_112_edition _11_05.pdf>> [gefunden am 2007-11-20]

## Beschreibung

Die Erfindung betrifft eine Karosserie für ein Kraftfahrzeug gemäß dem Oberbegriff des Anspruchs 1.

Es ist bereits bekannt, Mehrphasenstähle zum Bau von Fahrzeugkarosserien zu verwenden. Bei den Mehrphasenstählen werden die gewünschten Eigenschaften durch eine entsprechende Mischung unterschiedlich harter Gefügebestandteile gesteuert. Dies ist möglich, da Stahl in Abhängigkeit von den Umformbedingungen und den Abkühlbedingungen in unterschiedliche Gefügestrukturen umwandelbar ist. Solche Gefügestrukturen sind Ferrit, Austenit, Bainit und Martensit. Mehrphasenstähle decken eine Festigkeitsbereich R_{M} zwischen 500 und 1200 N/mm² ab (R_{M} = Zugfestigkeit).

Ferner ist es bekannt, das Stahlblech zu verzinken. Dies kann entweder über eine Feuerverzinkung oder elektrolytisch erfolgen. Die Stahlbleche können warm gewalzt oder kalt gewalzt werden. Durch die Verzinkung ergibt sich eine Oberflächenveredelung.

Außerdem ist es bekannt, Tailor-Rolled-Blank beim Karosseriebau zu verwenden, d.h. ein Blech mit unterschiedlichen Dicken.

Es ist auch bekannt, IF-Stahl (interstitial-free) zu verwenden, in dessen Eisenmatrix kein Kohlenstoff interstitiell eingelagert ist.

Ferner gibt es mikrolegierte höherfeste Stähle, die als Stahlblech bei einer Karosserie eingesetzt werden können.

Aus der US 2004/113461 A1 und aus der EP-A-1 190 938 ist eine gattungsbildende Karosserie für ein Kraftfahrzeug bekannt. Insbesondere weist eine Karosseriesäule der US 2004/113461 A1 bzw. der EP-A-1 190 938 im Querschnitt drei Hohlprofile auf, die aus einem äußeren Hohlprofil, einem mittleren Hohlprofil und einem inneren Hohlprofil bestehen.

Aus der DE 10202170 ist eine Karosserie eines Kraftfahrzeuges bekannt, bei der ein oberer Abschnitt einer mittleren Karosseriesäule, die sich jeweils hinter einem Fahrersitz oder einem Beifahrersitz befindet, nach innen in Richtung eines Fahrzeuginnenraumes versetzt ist. Der obere Abschnitt der jeweiligen mittleren Karosseriesäule erstreckt sich zwischen einem Dachrahmen und einer Türbrüstung. Die Versetzung des oberen Abschnittes der Karosseriesäule nach innen in Richtung eines Fahrzeuginnenraumes erfolgt so, dass sich ein Spalt von mehreren Zentimetern zwischen diesem Bereich und den dazu beabstandeten Seitenfenstern ergibt. Durch den Spalt zwischen dem oberen Abschnitt der mittleren Karosseriesäule zu den Seitenfenstern ist es möglich, eine durchgehende Fensterfläche, bestehend aus dem hinteren und vorderen Fenster, zu erzielen, was optisch schöner ist. Ferner ermöglicht diese Anordnung mehrere Öffnungsmöglichkeiten der Fenster, was die Frischluftrufuhr erhöht.

Aufgabe der Erfindung ist es, eine Karosserie für ein Kraftfahrzeug zu schaffen, die bei gleich hoher Belastbarkeit geringere Querschnitte erfordert, und einen freieren Blick für die Fondpassagiere und den Fahrer zu Schaffen.

Dies wird durch die Merkmale des Anspruchs 1 gelöst.

Bei einer erfindungsgemäßen Karosserie für ein Kraftfahrzeug weist mindestens die jeweilige seitencrashrelevante Karosseriesäule, insbesondere die mittlere Karosseriesäule, ein äußeres Hohlprofil, mindestens ein innenliegendes, mittleres Hohlprofil und ein inneres Hohlprofil auf. Durch die Ausbildung von mehreren Hohlprofilen ergibt sich bei einem geringen Querschnitt eine hohe Belastbarkeit. Die erfindungsgemäße Karosseriesäule kann dadurch eine schlanke Form erhalten.

Die erfindungsgemäß aufgebaute Karosseriesäule ergibt sich in einfacher Weise durch den Zusammenbau eines äußeren, mittleren Karosseriesäulenbleches eines äußeren Seitenrahmen-Bauteils mit einem Verstärkungsprofilblech, einem an dem Verstärkungsprofilblech befestigten Zusatzverstärkungsprofilblech und einem an dem Verstärkungsprofilblech angeordneten Schließblech.

Die erfindungsgemäße Karosseriesäule wird im einzelnen dadurch aufgebaut, dass an einer in einen Fahrzeuginnenraum gerichteten Oberfläche des äußeren, mittleren Karosseriesäulenbleches des äußeren Seitenrahmen-Bauteils das Verstärkungsprofilblech angeordnet wird. Das Verstärkungsprofilblech erstreckt sich von einem oberen Dachrahmenknoten bis zu einem unteren schwellerseitigen Knoten. Das Verstärkungsprofilblech bildet mit dem äußeren Karosseriesäulenblech ein äußeres, erstes Hohlprofil. Auf eine zum Fahrzeuginnenraum zeigende Oberfläche des Verstärkungsprofilbleches ist das Zusatzverstärkungsprofilblech befestigt, das einen seitencrashrelevanten Bereich überdeckt und mit dem Verstärkungsprofilblech mindestens ein innenliegendes, mittleres, zweites Hohlprofil bildet. Das Schließblech ist an dem Verstärkungsprofilblech und dem äußeren Karosseriesäulenblech befestigt, das sich zwischen dem oberen Dachrahmenknoten und dem unteren schwellerseitigen Knoten erstreckt. Das Schließblech bildet mit dem Verstärkungsprofilblech das innere, dritte Hohlprofil.

Zumindest die mittlere Karosseriesäule weist einen abgewinkelten Bereich oberhalb bzw in Höhe einer Anbindungsstelle für ein Türscharnier auf, so dass der obere Abschnitt der mittleren Karosseriesäule von einem Seitenfenster um einen Abstand a in Fahrzeugquerrichtung y beabstandet ist. Der Abstand a liegt vorteilhafterweise bei a = 2 bis 5 cm, so dass sich über die Breite der Seitenfenster ein Spalt ergibt, dessen Form sich durch den Verlauf des abgewinkelten Bereiches und den Verlauf der dazu gegenüberliegenden Seitenfenster ergibt. Durch den Spalt zwischen der abgewinkelten Karosseriesäule und dem dazu gegenüberliegenden Seitenfenster haben Fondpassagiere einen freieren Blick in Fahrtrichtung und der Fahrer hat einen größeren Sehbereich beim Blick zur Seite, z.B. beim Spurwechsel.

In einer vorteilhaften Ausführungsform ist am oberen Ende der mittleren Karosseriesäule das Schließblech mit einem Knotenprofil eines inneren Dachrahmenabschnittes verbunden.

Der Dachrahmenabschnitt ist vorteilhafterweise ein Hohlprofil, das aus einem äußeren Dachrahmenabschnitt, einem inneren Dachrahmenabschnitt und einem zwischen dem äußeren Dachrahmenabschnitt und dem inneren Dachrahmenabschnitt angeordneten Verstärkungsprofilblech gebildet ist.

Ein inneres Seitenrahmen-Bauteil weist in einer vorteilhaften Ausführungsform ein oberes Profilblechbauteil auf, das einen vorderen Abschnitt des inneren Dachrahmenabschnittes bildet. Das obere Profilblechbauteil erstreckt sich in Fahrzeuglängsrichtung x von einem Knotenbereich in Höhe eines oberen Endes eines Türsäulenabschnittes der vorderen Karosseriesäule bis zu einem Knotenbereich an einem oberen Ende der mittleren Karosseriesäule.

Neben den erfindungsgemäßen, konstruktiven Merkmalen durch die eine Karosserie für ein Kraftfahrzeug geschaffen wird, die bei gleich hoher Belastbarkeit geringere Querschnitte erfordert, ist eine geeignete Auswahl von Werkstoffen mit entsprechenden Werkstoffeigenschaften und Abmessungen für die einzelnen Bauteile wichtig.

So besteht in einer vorteilhaften Ausführungsform der verwendete Werkstoff für das äußere Seitenrahmen-Bauteil aus einem kalt gewalzten, höherfesten Stahlblech, das verzinkt ist.

Das Verstärkungsprofilblech hat vorteilhafterweise eine Blechdicke t von t = 2 mm ± 0,2 mm und besteht in einer vorteilhaften Ausführungsform aus einem warm umgeformten, pressgehärteten Stahlblech dessen Zugfestigkeit Rₘ bei Rₘ = 1500 N/mm² ± 20% liegt.

Das Zusatzverstärkungsprofilblech weist in einer vorteilhaften Ausführungsform eine Blechdicke t von t = 1,5 mm ± 0,2 mm auf. Der Werkstoff des Zusatzverstärkungsprofilbleches ist vorteilhafterweise ein kaltgewalzter, mikrolegierter Stahl mit einer Zinkbeschichtung, dessen Mindeststreckgrenze h bei h ≥420 N/mM² liegt.

In einer vorteilhaften Ausführungsform ist das Schließblech ein Tailor-Rolled-Blank mit einem oberen, einem mittleren und einem unteren Blechabschnitt, wobei die Blechabschnitte unterschiedliche Blechdicken t_{obem}, t_{Mitte} und tᵤₙₜₑₙ haben. Die Blechdicken t_{oben} und tᵤₙₜₑₙ für den oberen und den unteren Blechabschnitt liegen vorteilhafterweise bei t_{oben} = tᵤₙₜₑₙ = 0,85 mm ± 0,2 mm. Der mittlere Blechabschnitt des Schließbleches weist vorteilhafterweise eine Blechdicke t_{Mitte} von t_{Mitte} = 1,4 mm ± 0,2 mm auf.

Das Schließblech ist in einer vorteilhaften Ausführungsform ein kaltgewalztes zinkbeschichtetes, mikrolegiertes Stahlblech, dessen Mindeststreckgrenze h vorteilhafterweise bei h ≥420 N/mm² liegt.

Das mittlere, äußere Karosseriesäulenblech ist vorteilhafterweise ein kaltgewalztes, zinkbeschichtetes Stahlblech, dessen Blechdicke t in einer vorteilhaften Ausführungsform bei t = 0,8 mm ± 0,2 mm liegt.

In einer vorteilhaften Ausführungsform hat der innere Dachrahmenabschnitt eine Blechdicke t von t = 1,2 mm ± 0,2 mm und besteht vorteilhafterweise aus einem kaltgewalzten Dualphasenstahl, dessen Mindeststreckgrenze h bei h ≥340 N/mm² liegt.

Ein Verstärkungsprofilblech für einen Dachrahmenabschnitt bzw. einen Seitenrahmen weist vorteilhafterweise eine Blechdicke von t = 1,6 mm ± 0,2 mm auf und besteht in einer vorteilhaften Ausführungsform aus einem warmumgeformten, pressgehärteten Stahlblech, dessen Zugfestigkeit Rₘ bei Rₘ = 1500 N/mm² liegt. Vorteilhafterweise besteht das Verstärkungsprofilblech für einen Dachrahmenabschnitt aus 22 MnB5 hart.

Eine Ausführungsform der Erfindung wird nachstehend anhand der Zeichnungen beispielshalber beschrieben. Dabei zeigen:
- Fig. 1: eine perspektivische Darstellung eines Seitenrahmens vom Fahrzeuginnenraum aus in einer Explosionsdarstellung,
- Fig. 2: eine perspektivische Darstellung eines äußeren Seitenrahmen-Bauteils in einer Ansicht von außen sowie eine Explosionsdarstellung von Bauteilen einer mittleren Karosseriesäule,
- Fig. 3: eine perspektivische Darstellung einer teilweise dargestellten mittleren Karosseriesäule mit einem abgewinkelten, oberen Abschnitt,
- Fig. 4: eine perspektivische Darstellung einer teilweise dargestellten mittleren Karosseriesäule und deren Anbindung an einem Dachrahmen und
- Fig. 5: einen Querschnitt einer mittleren Karosseriesäule.

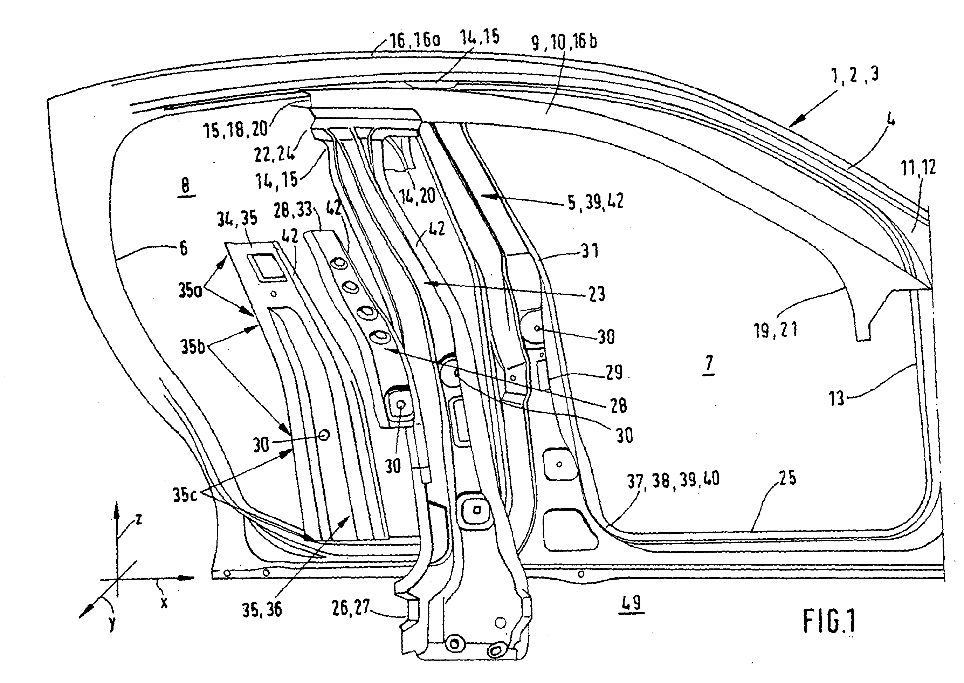

Die Fig. 1 zeigt ein äußeres Seitenrahmen-Bauteil 2 eines Seitenrahmens 3 einer nicht weiter dargestellten Karosserie 1 eines Kraftfahrzeuges, insbesondere eines Personenkraftwagens. Der Seitenrahmen 3 weist eine vordere Karosseriesäule 4, eine mittlere Karosseriesäule 5 sowie eine hintere Karosseriesäule 6 auf. In dem jeweiligen Seitenrahmen 3 sind jeweils eine vordere Türausschnittsöffnung 7 und eine hintere Türausschnittsöffnung 8 ausgebildet. Die Karosseriesäulen 4, 5, 6 sind an ihrem jeweiligen oberen Ende 5;15 über einen Dachrahmenabschnitt 16 und an ihrem jeweiligen unteren Ende 5;26,37,38 über einen Schweller 25 des Seitenrahmens 3 miteinander verbunden.

Der Dachrahmenabschnitt 16 ist in der gezeigten Ausführungsform ein Hohlprofil, das aus einem äußeren Dachrahmenabschnitt 16a, einem inneren Dachrahmenabschnitt 16b und einem zwischen dem äußeren Dachrahmenabschnitt 16a und dem inneren Dachrahmenabschnitt 16b angeordneten nicht dargestellten Verstärkungsprofilblech gebildet ist.

Der verwendete Werkstoff für den Seitenrahmen 3 besteht in der gezeigten Ausführungsform aus einem kalt gewalzten, höherfesten Stahlblech, das verzinkt ist. Beispielsweise wird ein Werkstoff mit der Materialbezeichnung HC180 YD+Z eingesetzt. Die Verzinkung kann über eine Feuerverzinkung oder über eine elektrolytische Verzinkung erfolgen.

Ein inneres Seitenrahmen-Bauteil 9 weist ein oberes Profilblechbauteil 10 auf, das einen vorderen Abschnitt des inneren Dachrahmenabschnittes 16b bildet. Das obere Profilblechbauteil 10 erstreckt sich in Fahrzeuglängsrichtung x von einem Knotenbereich 11 in Höhe eines oberen Endes 12 eines Türsäulenabschnittes 13 der vorderen Karosseriesäule 4 bis zu einem Knotenbereich 14 an einem oberen Ende 15 der mittleren Karosseriesäule 5.

In der gezeigten Ausführungsform haben der innere Dachrahmenabschnitt 16b bzw. das obere Profilblechbauteil 10 eine Blechdicke t₁₀ = t_{16b} von t₁₀ = t_{16b} = 1,2 mm ± 0,2 mm und bestehen aus einem kaltgewalzten Dualphasenstahl, dessen Mindeststreckgrenze h bei h ≥340 N/mm² liegt. Beispielsweise wird ein Werkstoff mit der Materialbezeichnung H340X eingesetzt.

Zwischen dem oberen Profilblechbauteil 10 und dem äußeren Seitenrahmen-Bauteil 2 ist ein nicht dargestelltes Verstärkungsprofilblech für zumindest einen Dachrahmenabschnitt vorgesehen.

Das Verstärkungsprofilblech für zumindest einen Dachrahmenabschnitt weist in der gezeigten Ausführungsform eine Blechdicke von t = 1,6 mm ± 0,2 mm auf und besteht aus einem kaltgewalzten, pressgehärteten oder einem warm umgeformten Stahlblech, dessen Zugfestigkeit Rₘ bei Rₘ = 1500 N/mm² liegt. Beispielsweise besteht das Verstärkungsprofilblech für einen Dachrahmenabschnitt aus HC950W.

Das obere Profilblechbauteil 10 weist an seinen gegenüberliegenden Enden 18, 19 jeweils ein Knotenprofil 20, 21 auf.

An dem Knotenprofil 20 des oberen Profilblechbauteils 10 ist ein Knotenprofil 22 eines Verstärkungsprofilbleches 23 zur Bildung der mittleren Karosseriesäule 5 angeordnet. Das Verstärkungsprofilblech 23 erstreckt sich zwischen dem Dachrahmenabschnitt 16 an seinem oberen Ende 24 und einem Schweller 25 des Seitenrahmens 3 an seinem unteren Ende 26. Am unteren Ende 26 des Verstärkungsprofilbleches 23 ist ebenfalls ein Knotenprofil 27 ausgebildet.

Das Verstärkungsprofilblech 23 hat in der gezeigten Ausführungsform eine Blechdicke t = 2 mm ± 0,2 mm und besteht aus einem warm umgeformten, pressgehärteten Stahlblech, dessen Zugfestigkeit Rₘ beispielsweise bei Rₘ = 1500 N/mm² ± 20% liegt. Beispielsweise wird ein Werkstoff mit der Materialbezeichnung HT1500PS eingesetzt.

An dem Verstärkungsprofilblech 23 ist ein Zusatzverstärkungsprofilblech 28 befestigt. Das Zusatzverstärkungsprofilblech 28 weist in der gezeigten Ausführungsform eine Blechdicke t₂₈ von t₂₈ = 1,5 mm ± 0,2 mm auf. Der Werkstoff des Zusatzverstärkungsprofilbleches 28 ist beispielsweise ein kaltgewalzter, mikrolegierter Stahl mit einer Zinkbeschichtung, dessen Mindeststreckgrenze h bei h ≥420 N/mm² liegt. Beispielsweise wird ein Werkstoff mit der Materialbezeichnung HC420LAD eingesetzt.

In der gezeigten Ausführungsform deckt das Zusatzverstärkungsprofilblech 28 einen Bereich ab, der sich von einer Anbindungsstelle 29 für ein nicht dargestelltes Türschloss, eine darüber ausgebildete Anbindungsstelle 30 für ein Türscharnier und bis in einen abgewinkelten Bereich 31 der mittleren Karosseriesäule 5 erstreckt. Der abgewinkelte Bereich 31 der mittleren Karosseriesäule 5 ist oberhalb einer Türbrüstung bzw. an einem unteren Rand von gegenüberliegenden, nicht dargestellten Seitenfenstern ausgebildet. Ein oberes Ende 33 des Zusatzverstärkungsprofilbleches 28 endet unterhalb des Knotenprofils 22 des Verstärkungsprofilbleches 23.

Ein oberes Ende 34 eines Schließbleches 35 der mittleren Karosseriesäule 5 ist an dem Knotenprofil 20 des oberen Profilblechbauteiles 10 befestigt. Das Schließblech 35 weist in der gezeigten Ausführungsform ein Tailor-Rolled-Blank mit einem oberen, einem mittleren und einem unteren Blechabschnitt 35a, 35b und 35c auf. Der obere, der mittlere und der untere Blechabschnitt 35a, 35b und 35c sind jeweils mit unterschiedlichen Blechdicken t_{35oben}, t_{35Mitte} und t₃₅ᵤₙₜₑₙ ausgebildet.

Die Blechdicke t_{35oben} des oberen Blechabschnittes 35a und die Blechdicke t₃₅ᵤₙₜₑₙ des unteren Blechabschnittes 35c liegen jeweils bei beispielsweise t_{35oben} = t₃₅ᵤₙₜₑₙ = 0,85 mm ± 0,2 mm. Der mittlere Blechabschnitt 35b des Schließbleches 35 weist beispielsweise eine Blechdicke t_{35Mitte} von t_{35Mitte} = 1,4 mm ± 0,2 mm auf. Das Schließblech 35 ist in der gezeigten Ausführungsform ein kaltgewalztes zinkbeschichtetes, mikrolegiertes Stahlblech, dessen Mindeststreckgrenze h beispielsweise bei h ≥420 N/mm² liegt. Beispielsweise wird ein Werkstoff mit der Materialbezeichnung HC420LAD eingesetzt.

Ein unteres Ende 36 des Schließbleches 35 ist in einer Ausführungsform mit einem nicht dargestellten Knotenprofil versehen, das mit dem Knotenprofil 27 des Verstärkungsprofilbleches 23 verbunden ist. Das Knotenprofil 27 wiederum ist an einem Knotenbereich 37 des äußeren Seitenrahmens 3 an einem unteren Ende 38 eines äußeren, mittleren Karosseriesäulenbleches 39 und einem entsprechenden Abschnitt 40 des Schwellers 25 angeordnet.

In der gezeigten Ausführungsform ist das mittlere, äußere Karosseriesäulenblech 39 ein kaltgewalztes, zinkbeschichtetes Stahlblech, dessen Blechdicke t₃₉ beispielsweise bei t₃₉ = 0,8 mm ± 0,2 mm liegt.

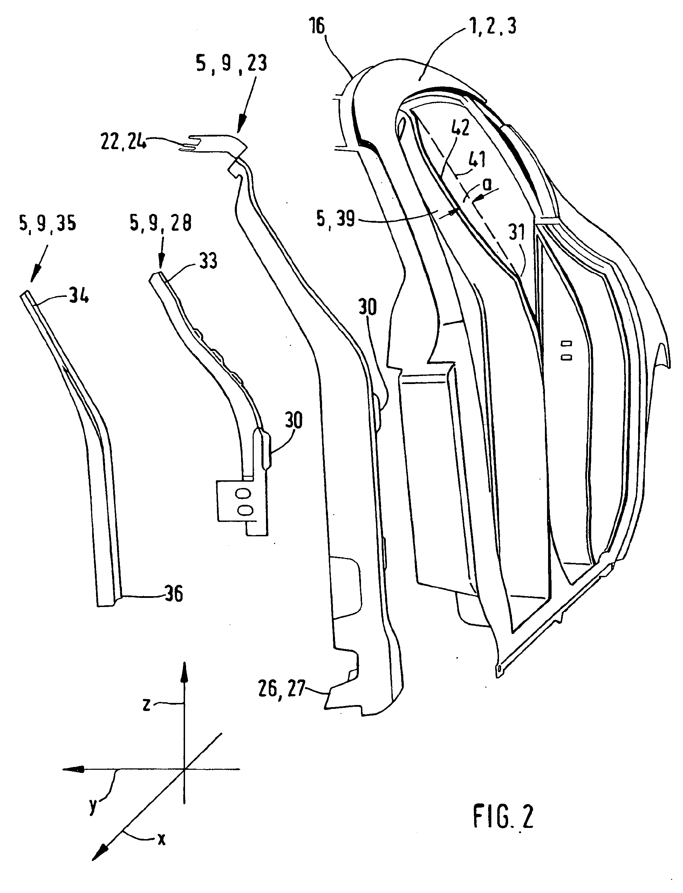

Aus der Fig. 2 geht die Reihenfolge und die Form der Bauteile 23, 28, 35 hervor, die im Bereich der mittleren Karosseriesäule 5 einen Abschnitt des inneren Seitenrahmen-Bauteils 9 bilden. Anhand eines Unterschiedes im Verlauf einer geradlinig verlaufenden, strichlierten Linie 41, die eine Innenfläche eines nicht dargestellten Seitenfensters symbolisiert, und einem oberen, abgewinkelten, äußeren Abschnitt 42 der mittleren Karosseriesäule 5,39 ist erkennbar, dass der obere Abschnitt 42 der mittleren Karosseriesäule 5 mit einem Abstand a in Fahrzeugquerrichtung y zu der Linie 41 bzw. zu der Innenfläche des Seitenfensters verläuft. Der Abstand a liegt bei a = 2 bis 6 cm. Der obere Abschnitt 42 der mittleren Karosseriesäule 5 verläuft in Höhe einer nicht dargestellten Türbrüstung bis zum Dachrahmenabschnitt 16.

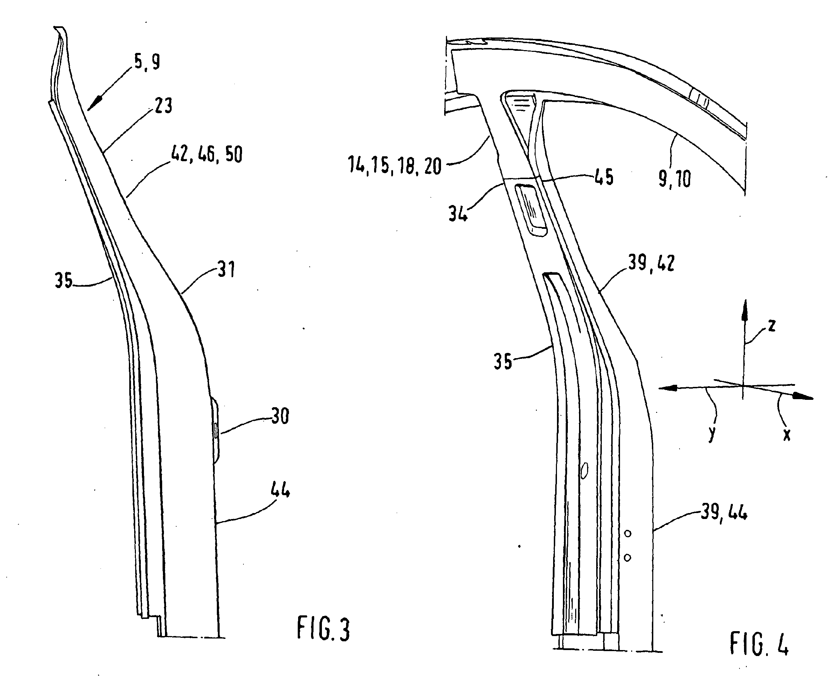

Die Fig. 3 zeigt eine perspektivische Ansicht eines zum inneren Seitenrahmen-Bauteil 9 gehörenden Abschnittes der mittleren Karosseriesäule 5. Dieser Abschnitt der mittleren Karosseriesäule 5 bildet mindestens ein innenliegendes, mittleres Hohlprofil 46, 47, 48 und ein inneres Hohlprofil 50. Die Hohlprofile 46, 50 sind aus dem Schließblech 35, dem in der Fig. 3 nicht dargestellten Zusatzverstärkungsprofilblech 28 und dem Verstärkungsprofilblech 23 gebildet.

Aus der Darstellung der Fig. 3 ist erkennbar, dass der obere Abschnitt 42 der Karosseriesäule 5 einen relativ geringen Querschnitt im Vergleich zu einem unteren Abschnitt 44 der Karosseriesäule 5 aufweist. Der Querschnitt des oberen Abschnittes 42 ist in der gezeigten Ausführungsform ca. 50% geringer als der Querschnitt des unteren Abschnittes 44.

Die Fig. 4 zeigt eine zusammengebaute mittlere Karosseriesäule 5 des Seitenrahmens 3. Aus der Fig. 4 ist die Verbindungsstelle 45 zwischen dem oberen Ende 34 des Schließbleches 35 und dem Knotenprofil 20 des oberen Profilblechbauteils 10 des inneren Seitenrahmen-Bauteils 9 erkennbar.

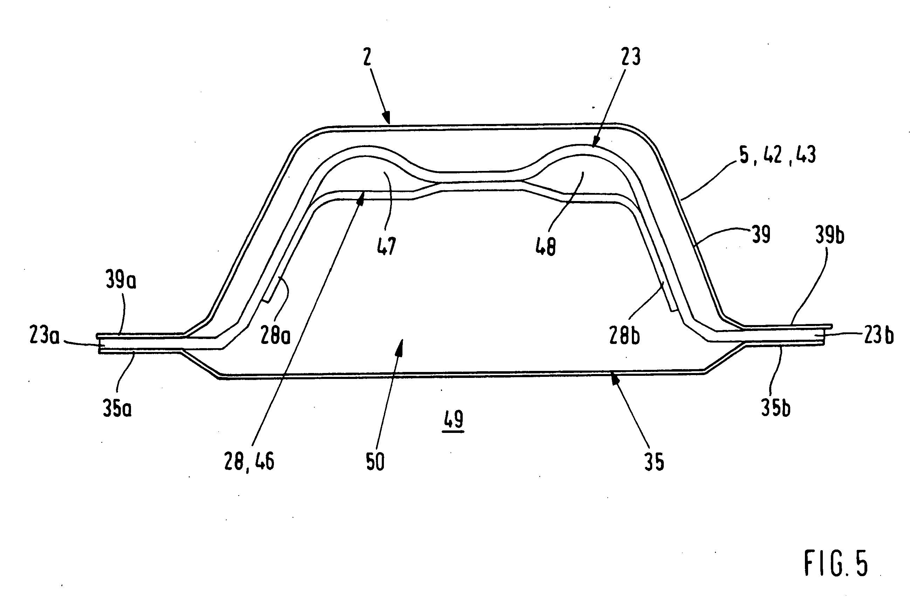

Die Fig. 5 zeigt einen Querschnitt des oberen Abschnittes 42 der mittleren Karosseriesäule 5. Die mittlere Karosseriesäule 5 weist das äußere Hohlprofil 43 auf, das sich zwischen dem oberen Profilblechbauteil 10 bzw. dem oberen Dachrahmenknoten 14 bis zum Knotenbereich 37 am Schwellerabschnitt 40 erstreckt. Das äußere Hohlprofil 43 wird dadurch gebildet, dass an in einen Fahrzeuginnenraum 49 gerichteten Oberflächen von seitlichen Flanschen 39a und 39b des äußeren, mittleren Karosseriesäulenbleches 39 des äußeren Seitenrahmen-Bauteils 2 die Anordnung von seitlichen Flanschen 23a und 23b des Verstärkungsprofilbleches 23 erfolgt.

Auf zum Fahrzeuginnenraum 49 zeigenden Oberflächen der seitlichen Flansche 23a und 23b des Verstärkungsprofilbleches 23 sind seitliche Flansche 28a und 28b das Zusatzverstärkungsprofilbleches 28 befestigt. Das Zusatzverstärkungsprofilblech 28 überdeckt einen seitencrashrelevanten Bereich und bildet mit dem Verstärkungsprofilblech 23 mindestens ein innenliegendes, mittleres Hohlprofil 46. Das innenliegende, mittlere Hohlprofil 46 weist in der gezeigten Ausführungsform zwei Hohlräume 47 und 48 auf.

Ein inneres Hohlprofil 50 ergibt sich dadurch, dass das Schließblech 35 in der gezeigte Ausführungsform über seitliche Flansche 35a und 35b an den seitlichen Flanschen 23a und 23b des Verstärkungsprofilbleches 23 befestigt ist. In einer anderen Ausführungsform kann das Schließblech 35 alternativ oder zusätzlich an dem äußeren Karosseriesäulenblech 39 befestigt sein. Das innere Hohlprofil 50 erstreckt sich zwischen dem oberen Dachrahmenknoten 14 und dem unteren schwellerseitigen Knoten 37.

## Patentansprüche

1. Karosserie (1) für ein Kraftfahrzeug, wobei die beiden Längsseiten der Karosserie (1) jeweils einen Seitenrahmen (3) aufweisen, der jeweils aus einem äußeren Seitenrahmen-Bauteil (2) und einem inneren Seitenrahmen-Bauteil (9) aufgebaut ist, wobei das innere Seitenrahmen-Bauteil (9) aus Einzelbauteilen zusammengesetzt ist, wobei der jeweilige Seitenrahmen (3) Türausschnittsöffnungen (7, 8) aufweist, wobei die Türausschnittsöffnungen (7, 8) in Fahrzeuglängsrichtung durch Karosseriesäulen (4, 5, 6) begrenzt sind, deren jeweiliges oberes Ende (15) mit einem Dachrahmenabschnitt (16) verbunden sind und deren jeweiliges unteres Ende an einem Schwellerabschnitt (25) angeordnet sind, wobei an den jeweiligen Verbindungsstellen der Karosseriesäulen (4, 5, 6) mit den Dachrahmenabschnitten (16) und den Schwellerabschnitten (25) Knotenbereiche ausgebildet sind, wobei mindestens eine Karosseriesäule (5) ein äußeres Hohlprofil (43), mindestens ein innenliegendes, mittleres Hohlprofil (46, 47, 48) und ein inneres Hohlprofil (50) aufweist, wobei die Hohlprofile (43; 50; 46, 47, 48) durch den Zusammenbau eines äußeren, mittleren Karosseriesäulenbleches (39) des äußeren Seitenrahmen-Bauteils (2), eines damit verbundenen Verstärkungsprofilbleches (23), eines an dem Verstärkungsprofilblech (23) befestigten Zusatzverstärkungsprofilbleches (28) und eines an dem Verstärkungsprofilblech (23) und/oder dem äußeren, mittleren Karosseriesäulenblechen (39) angeordneten Schließbleches (35) gebildet sind,
**dadurch gekennzeichnet, dass** zumindest die mittlere Karosseriesäule (5) einen abgewinkelten Bereich (31) oberhalb bzw. in Höhe einer Anbindungsstelle (30) für ein Türscharnier aufweist, so dass der obere Abschnitt (42) der mittleren Karosseriesäule (5) von einem dazu gegenüberliegenden Seitenfenster um einen Abstand a beabstandet ist.

2. Karosserie nach Anspruch 1,
**dadurch gekennzeichnet, dass** an einer in einen Fahrzeuginnenraum (49) gerichteten Oberfläche des äußeren, mittleren Karosseriesäulenbleches (39) des äußeren Seitenrahmen-Bauteils (2) die Bildung der Karosseriesäule (5) durch die Anordnung des Verstärkungsprofilbleches (23) erfolgt, das sich von einem oberen Dachrahmenknoten (14) bis zu einem unteren schwellerseitigen Knoten (37) erstreckt, dass das Verstärkungsprofilblech (23) mit dem äußeren Karosseriesäulenblech (39) ein äußeres Hohlprofil (43) bildet, dass auf eine zum Fahrzeuginnenraum (49) zeigende Oberfläche des Verstärkungsprofilbleches (23) das Zusatzverstärkungsprofilblech (28) befestigt ist, das einen seitencrashrelevanten Bereich überdeckt und mit dem Verstärkungsprofilblech (23) mindestens ein innenliegendes, mittleres Hohlprofil (46, 47, 48) bildet und dass das Schließblech (35) an dem Verstärkungsprofilblech (23) und dem äußeren Karosseriesäulenblech (39) befestigt ist, das sich zwischen dem oberen Dachrahmenknoten (14) und dem unteren schwellerseitigen Knoten (37) erstreckt und dass das Schließblech (35) mit dem Verstärkungsprofilblech (23) das innere Hohlprofil (50) bildet.

3. Karosserie nach den Ansprüchen 1 oder 2,
**dadurch gekennzeichnet, dass** am oberen Ende (15) der mittleren Karosseriesäule (5) das Schließblech (35) mit einem Knotenprofil (20) eines inneren Dachrahmenabschnittes (16) verbunden ist.

4. Karosserie nach Anspruch 3,
**dadurch gekennzeichnet, dass** der Dachrahmenabschnitt (16) ein Hohlprofil ist, das aus einem äußeren Dachrahmenabschnitt (16a) und einem inneren Dachrahmenabschnitt (16b) und einem zwischen dem äußeren Dachrahmenabschnitt (16a) und dem inneren Dachrahmenabschnitt (16b) angeordneten Verstärkungsprofilblech gebildet ist.

5. Karosserie nach Anspruch 4,
**dadurch gekennzeichnet, dass** ein inneres Seitenrahmen-Bauteil (9) ein oberes Profilblechbauteil (10) aufweist, das einen vorderen Abschnitt des inneren Dachrahmenabschnittes (16b) bildet, und dass sich das obere Profilblechbauteil (10) in Fahrzeuglängsrichtung x von einem Knotenbereich (11) in Höhe eines oberen Endes (12) eines Türsäulenabschnittes (13) der vorderen Karosseriesäule (4) bis zu einem Knotenbereich (14) an einem oberen Ende (15) der mittleren Karosseriesäule (5) erstreckt.

6. Karosserie nach einem der vorhergehenden Ansprüche,
**dadurch gekennzeichnet, dass** der Abstand a bei a = 2 bis 5 cm in Fahrzeugquerrichtung y liegt, so dass sich über die Höhe der Seitenfenster ein Spalt ergibt, dessen Form durch den Verlauf des abgewinkelten Bereiches (31) des oberen Abschnittes (42) der mittleren Karosseriesäule (5) und den Verlauf des jeweiligen dazu gegenüberliegenden Seitenfenster ergibt.

7. Karosserie nach einem der vorhergehenden Ansprüche, **dadurch gekennzeichnet, dass** der verwendete Werkstoff für den Seitenrahmen (3) aus einem kalt gewalzten, höherfesten Stahlblech besteht, das verzinkt ist.

8. Karosserie nach einem der vorhergehenden Ansprüche,
**dadurch gekennzeichnet, dass** das Verstärkungsprofilblech 23 eine Blechdicke t = 2 mm ± 0,2 mm hat und aus einem warm umgeformten, Stahlblech mit der Materialbezeichnung HC 950 W besteht.

9. Karosserie nach einem der vorhergehenden Ansprüche,
**dadurch gekennzeichnet, dass** das Zusatzverstärkungsprofilblech (28) eine Blechdicke t₂₈ von t₂₈ = 1,5 mm ± 0,2 mm aufweist und dass der Werkstoff des Zusatzverstärkungsprofilbleches (28) ein kaltgewalzter, mikrolegierter Stahl mit einer Zinkbeschichtung ist, dessen Mindeststreckgrenze h bei h ≥420 N/mm² liegt.

10. Karosserie nach einem der vorhergehenden Ansprüche,
**dadurch gekennzeichnet, dass** das Schließblech (35) ein Tailor-Rolled-Blank mit einem oberen, einem mittleren und einem unteren Blechabschnitt 35a, 35b und 35c aufweist, die unterschiedliche Blechdicken t_{35oben}, t_{35Mitte} und t₃₅ᵤₙₜₑₙ haben.

11. Karosserie nach Anspruch 10,
**dadurch gekennzeichnet, dass** die Blechdicken t_{35oben} und t₃₅ᵤₜₑₙ des Schließbleches (35) bei 0,85 mm ± 0,2 mm liegen und dass der mittlere Blechabschnitt 35b des Schließbleches (35) eine Blechdicke von t_{35Mitte} = 1,4 mm ± 0,2 mm aufweist.

12. Karosserie nach den Ansprüchen 10 oder 11,
**dadurch gekennzeichnet, dass** das Schließblech (35) ein kaltgewalztes zinkbeschichtetes, mikrolegiertes Stahlblech ist, dessen Mindeststreckgrenze h bei h ≥420 N/mm² liegt.

13. Karosserie nach einem der vorhergehenden Ansprüche, **dadurch gekennzeichnet, dass** das mittlere, äußere Karosseriesäulenblech (39) ein kaltgewalztes, zinkbeschichtetes Stahlblech ist, dessen Blechdicke t₃₉ bei t₃₉ = 0,8 mm ± 0,2 mm liegt.

14. Karosserie nach einem der vorhergehenden Ansprüche,
**dadurch gekennzeichnet, dass** das obere Profilblechbauteil (10) des inneren Seitenrahmen-Bauteil (9), das einen vorderen Abschnitt des inneren Dachrahmenabschnittes (16b) bildet und der innere Dachrahmenabschnitt (16b) eine Blechdicke t₁₀ = t _{16b} von t₁₀ = t _{16b} = 1,2 mm ± 0,2 mm haben und aus einem kaltgewalzten Dualphasenstahl bestehen, dessen Mindeststreckgrenze h bei h ≥340 N/mm² liegt.

15. Karosserie nach einem der vorhergehenden Ansprüche,
**dadurch gekennzeichnet, dass** ein Verstärkungsprofilblech für einen Dachrahmenabschnitt eine Blechdicke von t = 1,6 mm ± 0,2 mm aufweist und aus einem warmumgeformten Stahlblech besteht, dessen Zugfestigkeit Rₘ bei Rₘ = 1500 N/mm² liegt.

16. Karosserie nach Anspruch 15,
**dadurch gekennzeichnet, dass** das Verstärkungsprofilblech für einen Dachrahmenabschnitt aus 22 MnB5 besteht.

## Claims

1. A body (1) for a motor vehicle, wherein the two longitudinal sides of the body (1) each have a side frame (3) comprising an outer component (2) and an inner component (9), wherein the inner side-frame component (9) is made up of individual components, wherein each side frame (3) has door-hole openings (7, 8), wherein the door-hole openings (7, 8) are bounded in the longitudinal direction of the vehicle by body columns (4, 5, 6), the top end (15) of each column being connected to a roof frame portion (16) and the bottom end being disposed on a sillboard portion (25), wherein junction regions are formed at the places connecting the columns (4, 5, 6) to the roof frame portions (16) and to the sillboard portions (25), wherein at least one column (5) has an outer hollow profile (43), at least one inner middle hollow profile (46, 47, 48) and an inner hollow profile (50), wherein the hollow profiles (43; 50; 46, 47, 48) are made by joining an outer middle column plate (39) of the outer side frame component (2) to a connected reinforcing profile plate (23), an additional reinforcing profile plate (28) fastened to the reinforcing profile plate (23), and/or to the closing plate (35) disposed on the reinforcing profile plate (23) and/or on the outer middle column plates (39),
**characterised in that** at least the middle column (5) has a bent region (31) above or level with a place (30) for connecting a door hinge, so that the top portion (42) of the middle column (5) is at a distance a from an opposite side window.

2. A body according to claim 1, **characterised in that** the column (5) is formed on a surface, pointing towards an interior (49) of the vehicle, of the outer central column plate (39) of the outer side frame component (2), the column (5) being formed by the positioning of the reinforcing profile plate (23) which extends from a top roof frame junction (14) to a bottom junction (37) on the sillboard side; the reinforcing profile plate (23) co-operates with the outer column plate (39) to form an outer hollow profile (43); the additional reinforcing profile plate (28) is fastened to a surface of the reinforcing profile plate (23) pointing towards the interior (49) of the vehicle, the plate (28) covering a region of importance in the event of a side crash and cooperating with the reinforcing plate (23) to form at least one inner middle hollow profile (46, 47, 48); and the closure plate (35) is fastened to the reinforcing plate (23) and to the outer column plate (39), which extends between the top roof frame junction (14) and the bottom sillboard-side junction (37); and the closure plate (35) co-operates with the reinforcing profile plate (23) to form the inner hollow profile (50).

3. A body according to claim 1 or 2, **characterised in that** at the top end (15) of the middle column (5) the closure plate (35) is connected to a junction profile (20) of an inner roof frame portion (16).

4. A body according to claim 3, **characterised in that** the roof frame portion (16) is a hollow profile made up of an outer roof frame portion (16a) and an inner roof frame portion (16b) and a reinforcing profile plate disposed between the outer roof frame portion (16a) and the inner roof frame portion (16b).

5. A body according to claim 4, **characterised in that** an inner side frame component (9) comprises a top profile plate component (10) forming a front portion of the inner roof frame portion (16b) and the top profile plate component (10), in the longitudinal direction x of the vehicle, extends from a junction region (11) level with a top end (12) of a door column portion (13) of the front column (4) to a junction region (14) on a top end (15) of the middle column (5).

6. A body according to any of the preceding claims, **characterised in that** the distance a is 2 to 5 cm in the transverse direction y of the vehicle, resulting in a gap up the side window, the shape of the gap resulting from the curve of the bent region (31) of the top portion (42) of the middle column (5) and the curve of the opposite side window.

7. A body according to any of the preceding claims, **characterised in that** the material used for the side frame (3) is cold-rolled high-strength galvanised steel plate.

8. A body according to any of the preceding claims, **characterised in that** the reinforcing profile plate (23) has a thickness t = 2 ± 0.2 mm and is made of a hot-formed steel plate, material designation HC 950 W.

9. A body according to any of the preceding claims, **characterised in that** the additional reinforcing profile plate (28) has a thickness t₂₈ of 1.5 ± 0.2 mm and the additional reinforcing profile plate (28) is made of cold-rolled micro-alloyed steel with a zinc coating having a minimum yield strength h ≥ 420 N/mm².

10. A body according to any of the preceding claims, **characterised in that** the closing plate (35) is a tailor rolled blank comprising top, middle and bottom portions (35a, 35b and 35c) having different thicknesses t₃₅ₜₒₚ, t_{35middle} and t_{35bottom}.

11. A body according to claim 10, **characterised in that** the thicknesses t₃₅ₜₒₚ and t_{35bottom} of the closing plate (35) are 0.85 ± 0.2 mm and the middle portion (35b) of the closing plate (35) has a thickness t_{35middle} of 1.4 ± 0.2 mm.

12. A body according to claim 10 or 11, **characterised in that** the closing plate (35) is a cold-rolled zinc-coated micro-alloyed steel plate having a minimum yield strength h ≥ 420 N/mm².

13. A body according to any of the preceding claims, **characterised in that** the outer middle body-column plate (39) is a cold-rolled zinc-coated steel plate having a thickness t₃₉ of 0.8 ± 0.2 mm.

14. A body according to any of the preceding claims, **characterised in that** the top profile-plate component (10) of the inner side frame component (9), forming a front portion of the inner roof frame portion (16b), and the inner roof frame portion (16b) have a thickness t₁₀ = t_{16b} of 1.2 ± 0.2 mm and are made of cold-rolled dual-phase steel having a minimum yield strength h ≥ 340 N/mm².

15. A body according to any of the preceding claims, **characterised in that** a reinforcing profile plate for a roof frame portion has a thickness t = 1.6 ± 0.2 mm and is made of hot-formed steel plate having a tensile strength Rₘ = 1500 N/mm².

16. A body according to claim 15, **characterised in that** the reinforcing profile plate for a roof frame portion is made of 22 MnB5.

## Revendications

1. Carrosserie (1) de véhicule automobile dans laquelle,
les deux côtés longitudinaux de la carrosserie (1) comportent chacun un cadre latéral (3) formé d'un composant extérieur de cadre latéral (2) et d'un composant intérieur de cadre latéral (9),
- le composant intérieur de cadre latéral (9) étant formé de pièces séparées,
- le cadre latéral (3) respectif comportant des découpes d'ouverture de porte (7, 8),
- les découpes d'ouverture de porte (7, 8) étant délimitées dans la direction longitudinale du véhicule par des colonnes de carrosserie (4, 5, 6) dont l'extrémité supérieure (15) respective est reliée à un segment de cadre de toit (16) et dont l'extrémité inférieure respective est prévue sur un segment de seuil (25),
- les points de liaison respectifs des colonnes de carrosserie (4, 5, 6) avec les segments de cadre de toit (16) et les segments de seuil (25) étant réalisés sous forme de zones de noeuds,
- au moins une colonne de carrosserie (5) comporte un profilé creux extérieur (43), au moins un profilé creux médian (46, 47, 48) du côté intérieur et un profilé creux intérieur (50),
- les profilés creux (43; 50; 46, 47, 48) sont formés par l'assemblage d'une tôle de colonne de carrosserie médiane (39) extérieure du composant extérieur (2) de cadre latéral, d'une tôle profilée de renforcement (23) reliée à celle-ci, d'une tôle profilée de renforcement complémentaire (28) fixée à la tôle profilée de renforcement (23) et d'une tôle de fermeture (35) sur la tôle profilée de renforcement (23) et/ou sur la tôle de colonne médiane de carrosserie (39), extérieure, **caractérisée en ce qu'**
au moins la colonne médiane de carrosserie (5) présente une zone coudée (31) au-dessus ou à hauteur d'un point de fixation (30) d'une charnière de portière de façon que le segment haut (42) de la colonne médiane de carrosserie (5) soit écarté de la distance (a) par rapport à une fenêtre latérale.

2. Carrosserie selon la revendication 1,
**caractérisée en ce que**
- la surface supérieure de la tôle de colonne médiane (39) de carrosserie, extérieure, du composant extérieur (2) de cadre latéral, tôle tournée vers l'habitacle (49) du véhicule, forme la colonne de carrosserie (5) par le montage de la tôle profilée de renforcement (23) s'étendant à partir d'un noeud supérieur de cadre de toit (14) jusqu'à un noeud inférieur (37) côté seuil,
- la tôle profilée de renforcement (23) forme un profilé creux extérieur (43) avec la tôle de colonne extérieure de carrosserie (39),
- la tôle profilée de renforcement complémentaire (28) est fixée sur la surface supérieure de la tôle profilée de renforcement (23) tournée vers l'habitacle (49) du véhicule, cette tôle profilée de renforcement complémentaire couvrant une zone caractéristique de collision latérale et avec la tôle profilée de renforcement (23), elle forme au moins un profilé creux médian (46, 47, 48) situé du côté intérieur, et
- la tôle de fermeture (35) est fixée à la tôle profilée de renforcement (23) et à la tôle extérieure (39) de la colonne de la carrosserie, qui s'étend entre le noeud supérieur du cadre de toit (14) et le noeud inférieur (37) côté seuil, et
- la tôle de fermeture (35) constitue le profil creux intérieur (50) avec la tôle profilée de renforcement (23).

3. Carrosserie selon la revendication 1 ou 2,
**caractérisée en ce que**
l'extrémité supérieure (15) de la colonne médiane (5) de la carrosserie est reliée à la tôle de fermeture (35) par un profilé de noeud (20) d'un segment intérieur de cadre de toit (16).

4. Carrosserie selon la revendication 3,
**caractérisée en ce que**
le segment de cadre de toit (16) est un profilé creux formé d'un segment extérieur de cadre de toit (16a) et d'un segment intérieur de cadre de toit (16b) ainsi que d'une tôle profilée de renforcement entre le segment de cadre de toit extérieur (16a) et le segment de cadre de toit intérieur (16b).

5. Carrosserie selon la revendication 4,
**caractérisée en ce qu'**
un composant intérieur de cadre latéral (9) comporte un composant supérieur de tôle profilée (10) formant un segment avant du segment intérieur de cadre de toit (16b), et
le composant de tôle profilée (10), supérieur, s'étend dans la direction longitudinale (x) du véhicule entre une zone de noeuds (11) à la hauteur de l'extrémité supérieure (12) d'un segment de colonne de portière (13) de la colonne avant (4) de la carrosserie jusqu'à une zone de noeuds (14) à l'extrémité supérieure (15) de la colonne de carrosserie médiane (5).

6. Carrosserie selon l'une des revendications précédentes,
**caractérisée en ce que**
la distance (a) pour a = 2 à 5 cm se situe dans la direction transversale (y) du véhicule de façon qu'au niveau de la hauteur de la fenêtre latérale, on aura un intervalle dont la forme est définie par le tracé de la zone coudée (31) du segment supérieur (42) de la colonne médiane (5) de la carrosserie et du tracé de la fenêtre latérale respective, opposée.

7. Carrosserie selon l'une des revendications précédentes,
**caractérisée en ce que**
le matériau utilisé pour réaliser le châssis latéral (3) est une tôle d'acier très résistante, laminée à froid et zinguée.

8. Carrosserie selon l'une des revendications précédentes,
**caractérisée en ce que**
la tôle profilée de renforcement (23) a une épaisseur de tôle telle que t = 2 mm ± 0,2 mm et se compose d'une tôle d'acier transformée à chaud et correspondant à la référence matière HC 950 W.

9. Carrosserie selon l'une des revendications précédentes,
**caractérisée en ce que**
la tôle profilée de renforcement supplémentaire (28) a une épaisseur t₂₈ telle que t₂₈ = 1,5 mm ± 0,2 mm, et
la matière de la tôle profilée de renforcement (28) est un acier laminé à froid, microalliée et correspondant à une référence de zinc, la limite élastique minimale (h) se situant à h ≥ 420 N/mm².

10. Carrosserie selon l'une des revendications précédentes, **caractérisée en ce que**
la tôle de fermeture (35) est une tôle laminée Tailor ayant un segment de tôle 35a, 35b, 35c supérieur, médian et inférieur avec des épaisseurs de tôle différentes t_{35oben}, t_{35Mitte} et t₃₅ᵤₙₜₑₙ.

11. Carrosserie selon la revendication 10,
**caractérisée en ce que**
les épaisseurs de tôle t_{35oben}, t_{35Mitte} et t₃₅ᵤₙₜₑₙ de la tôle de fermeture (35) se situent entre 0,85 mm ± 0,2 mm et le segment de tôle médian 35b de la tôle (35) a une épaisseur de tôle telle que t_{35Mitte} = 1,4 mm ± 0,2 mm.

12. Carrosserie selon les revendications 10 ou 11,
**caractérisée en ce que**
la tôle de fermeture (35) est une tôle d'acier micro-alliée, revêtue de zinc et laminée à froid, et dont la limite élastique minimale (h) est telle que h ≥ 420 N/mm².

13. Carrosserie selon l'une des revendications précédentes,
**caractérisée en ce que**
la tôle de colonne de carrosserie (39), médiane, extérieure, est une tôle d'acier revêtue de zinc, laminée à froid, dont l'épaisseur de tôle t₃₉ est telle que t₃₉ = 0,8 mm ± 0,2 mm.

14. Carrosserie selon l'une des revendications précédentes,
**caractérisée en ce que**
le composant supérieur de tôle profilée (10) du composant intérieur (9) du cadre latéral, forme un segment avant du segment intérieur de cadre de toit (16b) et le segment intérieur de cadre de toit (16b) a une épaisseur de tôle telle que t₁₀ = t_{16b} jusqu'à t₁₀ = t_{16b} = 1,2 mm ± 0,2 mm et se compose d'un acier à deux phases, laminé à froid dont la limite élastique minimale (h) se situe à h ≥ 340 N/mm².

15. Carrosserie selon l'une des revendications précédentes,
**caractérisée en ce qu'**
une tôle profilée de renforcement d'un segment de cadre de toit correspond à une épaisseur de tôle de t = 1,6 mm ± 0,2 mm et se compose d'une tôle d'acier déformée à chaud dont la résistance à la traction Rₘ est telle que Rₘ = 1500 N/mm².

16. Carrosserie selon la revendication 15,
**caractérisée en ce que**
la tôle profilée de renforcement correspond à un segment de cadre de toit de 22 MnB5.
